Europäisches Patentamt

European Patent Office

Office européen des brevets

(19)

(11) Veröffentlichungsnummer: **0 003 024**
**B1**

(12) **EUROPÄISCHE PATENTSCHRIFT**

(45) Veröffentlichungstag der Patentschrift: **20.01.82**

(21) Anmeldenummer: **78101597.9**

(22) Anmeldetag: **07.12.78**

(51) Int. Cl.³: **B 23 Q 41/02, B 65 G 47/48**

(54) Flexibles Fertigungssystem.

(30) Priorität: **11.01.78 DE 2800951**

(43) Veröffentlichungstag der Anmeldung:
**25.07.79 Patentblatt 79/15**

(45) Bekanntmachung des Hinweises auf die Patenterteilung:
**20.01.82 Patentblatt 82/3**

(84) Benannte Vertragsstaaten:
**BE CH FR GB IT SE**

(56) Entgegenhaltungen:
**DE - A - 1 809 745**
**DE - A - 1 814 452**
**DE - A - 1 814 458**
**DE - B - 1 556 643**
**DE - B - 1 930 923**
**DE - C - 1 152 664**
**US - A - 3 140 669**

**WERKSTATT UND BETRIEB**
**108. Jahrgang, Heft 8, August 1975,**
**Berlin**
**P. NEUBRAND "Flexibles Fertigungssystem**
**für Getriebeteile"**
**Seiten 481 bis 487**

(73) Patentinhaber: **Gebr. Heller Maschinenfabrik**
**GmbH**
**Postfach 1428**
**D-7440 Nürtingen (DE)**

(72) Erfinder: **Haussmann, Herbert**
**Wertäckerstrasse 3**
**D-7440 Nürtingen-Reudern (DE)**
Erfinder: **Maier, Heinz**
**Duttenhoferstrasse 33**
**D-7440 Nürtingen (DE)**

(74) Vertreter: **Bernhardt, Klaus**
**Reinländer & Bernhardt Patentanwälte**
**Orthstrasse 12**
**D-8000 München 60 (DE)**

## Flexibles Fertigungssystem

Die Erfindung betrifft ein flexibles Fertigungssystem für auf Paletten befestigte Werkstücke, bestehend aus einer Anzahl Bearbeitungsmaschinen, einer diese miteinander und einer Lade- und Entlade-Station verbindenden Werkstückpalettenförderanlage, den einzelnen Werkstückpaletten zuzuordnenden Kennzeichnen, Lesestationen zum Ablesen der Kennzeichen an den Ausfahrstellen und Einrichtungen für die Einstellung einer neuen Zieladresse ("Werkstatt und Betrieb" *108* (1975) Heft 8, Seiten 481 bis 554).

Bei dem bekannten Fertigungssystem dieser Art besteht das Kennzeichen aus einer festen Codierung und einer veränderlichen Codierung an jeder Palette. Nach der Bearbeitung eines Werkstücks in einer Bearbeitungsmaschine wird die veränderliche Codierung geändert, indem einzelne kippbare Nocken umgestellt werden, daraus ergibt sich, ob die betreffende Palette, und damit das Werkstück, schon in einer Bearbeitungsmaschine war oder nicht.

Ein solches Kennzeichen hat den Nachteil, daß an jeder Bearbeitungsmaschine eine Einrichtung vorgesehen sein muß, mit der die Codierung geändert werden kann. Eine solche Einrichtung erfordert einen beträchtlichen Aufwand an jeder Bearbeitungsmaschine. Ein solcher Aufwand läßt sich allenfalls noch vertreten, wenn die Änderung der Codierung und damit die Einstellung der neuen Zieladresse sich darauf beschränkt, einzelne kippbare Nocken umzustellen, um anzuzeigen, daß das Werkstück bereits die erste Zieladresse (Bearbeitungsmaschine) durchlaufen hat, ist aber praktisch nicht mehr vertretbar, wenn das gleiche Werkstück in einer größeren Anzahl von Bearbeitungsmaschinen bearbeitet werden muß, und vor allem, wenn das gleiche Werkstück nach einer Zwischenbearbeitung auf einer anderen Bearbeitungsmaschine nochmals zu einer Bearbeitungsmaschine zurück muß, um dort nach einem anderen Programm bearbeitet zu werden. In diesem Falle genügt nämlich nicht die einfache Information, daß das Werkstück bereits die betreffende Bearbeitungsmaschine durchlaufen hat, sondern es muß nicht nur eine vollständig neue Zieladresse, sondern auch das dort abzurufende Bearbeitungsprogramm in das Kennzeichen eincodiert werden. Mit anderen Worten bedeutet das, daß an jeder Bearbeitungsmaschine eine Einrichtung vorhanden sein muß, mit der das Kennzeichen völlig neu programmiert werden kann, wozu natürlich gehört, daß an dieser Einrichtung auch das nächstfolgende Programm abgerufen und bei der Einstellung der neuen Zieladresse in das Kennzeichen eingegeben werden kann (DE—A—1 809 745).

Allgemein veränderbare Kennzeichen und Einrichtungen zu deren Veränderung sind bekannt, neben den bereits erwähnten kippbaren Nocken beispielsweise magnetische Kennzeichen (DE—A—19 30 923) oder ein-und ausrückbare Finger (DE—A—1 814 452).

Allgemein haben veränderbare Kennzeichen darüber hinaus den Nachteil, daß sie beim Umlauf der Werkstücke auf der Förderanlage versehentlich verändert werden können, wodurch erhebliche Störungen entstehen können, die bis zur schweren Beschädigung einer Bearbeitungsmaschine gehen können, beispielsweise wenn das Endbearbeitungsprogramm abgerufen wird, ehe das Vorbearbeitungsprogramm durchlaufen ist.

Es ist bereits im Zusammenhang mit einer Transportanlage ein Kennzeichen beschrieben worden, welches aus einer in mehrere Raststellungen drehbaren Trommel besteht, auf deren Umfang eine der Zahl der Raststellungen gleiche Zahl von Kodierzeilen angeordnet ist, in deren jeder eine vollständige Zieladresse darstellbar ist (DE - PS 11 52 664). Die Trommel besteht bei dieser bekannten Anordnung aus ferromagnetischem Werkstoff, in deren Innerem eine Zeile von Magnetpaaren angeordnet ist, während eine Kodierzeile aus einer der Anzahl der Magnetpaare gleichen Anzahl von Löchern besteht, von denen jedes jeweils einen der Magneten eines Paares freigibt, so daß das Magnetfeld des betreffenden Magneten von außen abfühlbar ist, das des anderen des gleichen Paares jedoch nicht. Für ein flexibles Fertigungssystem ist dieses bekannte Kennzeichen nicht geeignet. Zunächst reicht es bei einem flexiblen Fertigungssystem keinesfalls aus, nur die Zieladresse im Kennzeichen zu kodieren, mindestens in einem Teil der Fälle müssen noch zusätzliche Informationen einkodiert sein, die das in der nächsten Bearbeitungsmaschine durchzuführende Programm betreffen. Ferner kann ein einmal hergestelltes Lochbild in einer Trommel nicht mehr verändert werden, so daß bei der kleinsten Änderung des Bearbeitungsprogramms die Trommel ausgebaut und eine neue angefertigt und eingebaut werden muß. Überdies war bei der bekannten Anordnung ein Verdrehen der Trommel in beliebiger Richtung und um eine beliebige Anzahl von Raststellungen von Hand vorgesehen, es war also keine Einrichtung für die Einstellung einer neuen Zieladresse vorgesehen, wie sie bei einem flexiblen Fertigungssystem unumgänglich ist, und es war vor allem keine Vorkehrung dafür getroffen, sicherzustellen, daß beim Übergang von einer Raststellung in eine andere zuverlässig nur die gewollte Raststellung und damit Zieladresse eingestellt wird.

Es sind auch bereits flexible Fertigungssysteme für Werkstücke bekanntgeworden, die sich von dem eingangs genannten darin unterscheiden, daß keine Einrichtungen für die Einstellung einer neuen Zieladresse vorgesehen sind, so daß das Kennzeichen unverändert bleibt, bei diesen ist jedoch ein zentraler Prozessrechner erforderlich, der dafür eingerichtet ist, den Lauf jedes einzelnen Werkstückes durch das ganze System zu verfolgen und zu steuern. Das erfordert einen praktisch nicht vertretbaren Aufwand (DE—A— 1 814 458).

Aufgabe der Erfindung ist es deshalb, ein flexibles Fertigungssystem der eingangs genannten Art derart zu verbessern, daß veränderliche Kennzeich und die zu deren Veränderung erforderlichen Einrichtungen an den einzelnen Bearbeitungsmaschinen überflüssig werden.

Erfindungsgemäß wird diese Aufgabe dadurch gelöst, daß das Kennzeichen aus einer in mehrere Raststellungen drehbaren Trommel besteht, auf deren Umfang eine der Zahl der Raststellungen gleiche Zahl von Codierleisten angeordnet ist, in deren jeder eine vollständige Zieladresse einschließlich eventueller Prüfzeichen darstellbar ist, dass zumindest ein Teil der Kodierleisten weitere Kennzeichnungen enthält und daß die Einrichtung für die Einstellung einer neuen Zieladresse aus einem Schaltmechanismus besteht, der die Trommel jeweils selbsttätig um eine Teilung aus einer Raststellung in die nächstfolgende weiterdreht.

Die erfindungsgemäß vorgesehene Trommel weist keine veränderlichen Kennzeichen auf, so daß die Gefahr einer versehentlichen Umcodierung völlig beseitigt ist, ein Schaltmechanismus, der die Trommel jeweils in eine folgende Raststellung dreht, ist im Vergleich zu einer Einrichtung zur Änderung des Kennzeichens außerordentlich einfach. Darüber hinaus kann eine solche Trommel so viele Zieladressen enthalten, wie Raststellungen vorhanden sind, also für praktische Bedürfnisse unbegrenzt viele, und es ist ohne weiteres möglich, neben der Zieladresse auch die erforderliche Programminformation im Kennzeichen unterzubringen. Geeignete Codierleisten sind bekannt (vergl. beispielsweise DAS 15 56 643).

Dadurch, daß die Trommel jeweils in einer Raststellung verrastet ist, ist bereits eine weitgehende Sicherheit gegen unbeabsichtigtes Verstellen erreicht. Eine absolute Sicherheit kann gemäß einer Weiterbildung der Erfindung dadurch erreicht werden, daß die Trommel formschlüssig in ihren Raststellungen durch Eingriff von Rastzähnen festgelegt ist, die axial aus dem Eingriff herausschiebbar sind, und daß der Schaltmechanismus eine die Rastzähne aus dem Eingriff herausschiebende Steuerbahn aufweist. Durch eine solche Maßnahme ist gewährleistet, daß die Trommel unter keinen Umständen versehentlich aus der eingestellten Stellung heraus verdreht wird. Die Rastzähne können dabei durch Federkraft und/oder Eigengewicht in den formschlüssigen Eingriff gedrängt sein.

Grundsätzlich ist es möglich, für ein Werkstück eine Trommel fest zu codieren und an der Werkstückpalette anzubringen, wenn nämlich die Werkstückpalette speziell nur für ein bestimmtes Werkstück vorgesehen ist. Für den Fall, daß Änderungen des Werkstücks berücksichtigt werden sollen und/oder daß die Palette für unterschiedliche Werkstücke geeignet ist, wird zweckmäßigerweise jede Codierleiste zur auswechselbaren Aufnahme einer Reihe von Nocken, Schaltbolzen, Magneten, optischen Markierungen oder dergleichen Kennzeichnungselementen vorgesehen. Bei Änderungen am Werkstück braucht dann nicht die ganze Trommel ausgewechselt zu werden; es genügt, die Kennzeichnungselemente an der betreffenden Codierleiste bzw. den betreffenden Codierleisten auszuwechseln, bzw. zu ändern. Die Lesestationen müssen natürlich, wie üblich, zum Ablesen der gewählten Kennzeichnungselemente geeignet sein.

Um ein Verschmutzen der Kennzeichen während der Bearbeitung, etwa durch Späne oder Schmiermittel, zu verhindern, was besonders bei magnetischen und optischen Markierungen wichtig ist, weist zweckmäßigerweise der Maschinentisch jeder Bearbeitungsmaschine eine Abdeckung auf, die die Trommel bei auf dem Maschinentisch befindlicher Palette völlig abdeckt.

Wenn eine solche Abdeckung vorgesehen ist, ist es im allgemeinen nicht, oder nur schwer, möglich, das Kennzeichen abzulesen, wenn die Palette sich auf dem Maschinentisch befindet. Es ist deshalb erforderlich, die im Kennzeichen enthaltene Programmangabe für die Bearbeitungsmaschine, soweit vorhanden, an einer anderen Stelle abzulesen. Dazu stehen mehrere Möglichkeiten zur Verfügung, als praktisch günstigste hat sich die Lösung herausgestellt, daß zwischen jeder zu einer Bearbeitungsmaschine führenden Ausfahrstelle und der betreffenden Bearbeitungsmaschine eine speichernde Lesestation zum Ablesen und Speichern von über die Zieladresse hinaus in einer Kodierleiste enthaltenen Kennzeichnungen angeordnet ist. Eine solche Lesestation nimmt die Programmangabe unmittelbar vor dem Einfahren des Werkstücks in die Bearbeitungsmaschine auf und hält sie zum Abruf durch das Bearbeitungsmaschinenprogramm bereit, so daß der Abruf unmittelbar nach Beendigung der Bearbeitung des vorhergehenden Werkstückes erfolgen kann und bereits während der Werkstückwechselzeit die Bearbeitungsmaschine mit dem für kommenden Arbeitsgang benötigten Werkzeug bzw. Mehrspindelkopf bestückt werden kann.

Die Erfindung soll anhand der Zeichnung näher erläutert werden; es zeigen:

Fig. 1 schematisch eine Aufsicht auf ein flexibles Fertigungssystem;

Fig. 2 eine isometrische Ansicht einer Ausfahrstelle der Werkstückförderanlage des Systems nach Fig. 1, die zu einer Bearbeitungsmaschine führt;

Fig. 3 eine Aufsicht auf eine erfindungsgemäße Kennzeichentrommel in Verbindung mit einer Lesestation;

Fig. 4 einen Längsschnitt durch eine erfindungsgemäße Kennzeichentrommel in Verbindung mit einem Schaltmechanismus; und

Fig. 5 einen Schnitt längs der Linie V—V in Fig. 4.

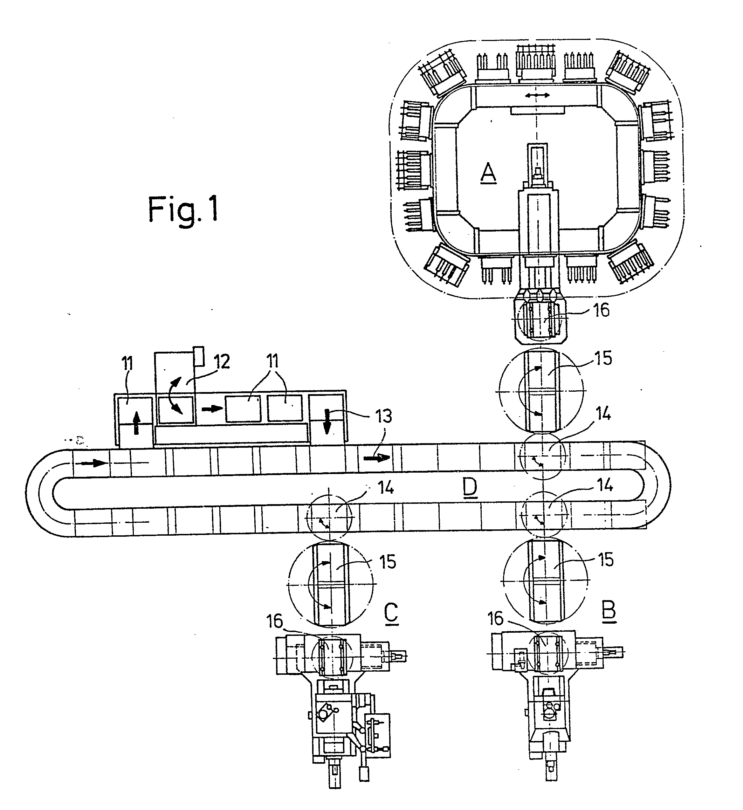

In Fig. 1 ist ein flexibles Fertigungssystem mit drei Bearbeitungsmaschinen A, B und C und einer Werkstückförderanlage D dargestellt. Die nicht dargestellten Werkstücke werden in bekannter Weise auf Paletten 11 aufgespannt und mit diesen in einer Lade- und Entladestation 12 auf die Förderanlage D in ebenfalls bekannter Weise aufgegeben. Von dort laufen sie in ebenfalls bekannter Weise im Sinne der Pfeile 13 auf der Förderanlage D um. Vor jeder der drei Bearbeitungsmaschinen befindet sich in der Förderanlage D eine Ausfahrstelle 14, von der die Palette mit dem Werkstück jeweils auf einen Schwenktisch 15 gelangen kann, von dem sie wiederum zum Maschinentisch 16 der zugehörigen Bearbeitungsmaschine gebracht wird. Nach der Ankunft auf dem Bearbeitungstisch 16 und dem Verspannen erfolgt die Bearbeitung des Werkstücks durch die betreffende Bearbeitungsmaschine nach einem vorgegebenen Programm, anschließend wird die Palette mit dem Werkstück über den Schwenktisch 15 und die Ausfahrstelle 14 wieder in die Förderanlage D eingeschleust und läuft weiter zur nächsten Bearbeitungsmaschine bzw. zur Entladestation 12, wo sie aus der Förderanlage herausgenommen wird, das bearbeitete Werkstück abgespannt und ein neues Werkstück auf die Palette 11 aufgespannt wird, die dann wieder in der Ladestation 12 auf die Förderanlage D aufgegeben wird. Ein solches Fertigungssystem ist bekannt und braucht deshalb hier nicht näher erläutert zu werden.

Im dargestellten Ausführungsbeispiel sind drei verschiedene Bearbeitungsmaschinen, eine Vielspindel-Bohrmaschine A mit auswechselbaren Mehrspindelköpfen, eine Fräsmaschine B und eine Bearbeitungszentrum C mit automatischem Werkzeugwechsel vorgesehen. Eine Erweiterung um zusätzliche Bearbeitungsmaschinen, sowohl gleichartige als auch andersartige, ist ersichtlich ohne weiteres möglich; der Übersichtlichkeit halber sind jedoch nur die drei genannten Bearbeitungsmaschinen dargestellt.

Um echte Flexibilität des Systems zu erreichen, ist es notwendig, dafür Vorsorge zu treffen, daß jedes Werkstück die Bearbeitungsmaschinen in beliebiger Reihenfolge anlaufen kann, und daß es vor allem möglich ist, das gleiche Werkstück nach einer Zwischenbearbeitung auf einer anderen Bearbeitungsmaschine nochmals zu einer Bearbeitungsmaschine laufen zu lassen, die das Werkstück früher bereits durchlaufen hat, um dort eine weitere, andere Bearbeitung durchzuführen.

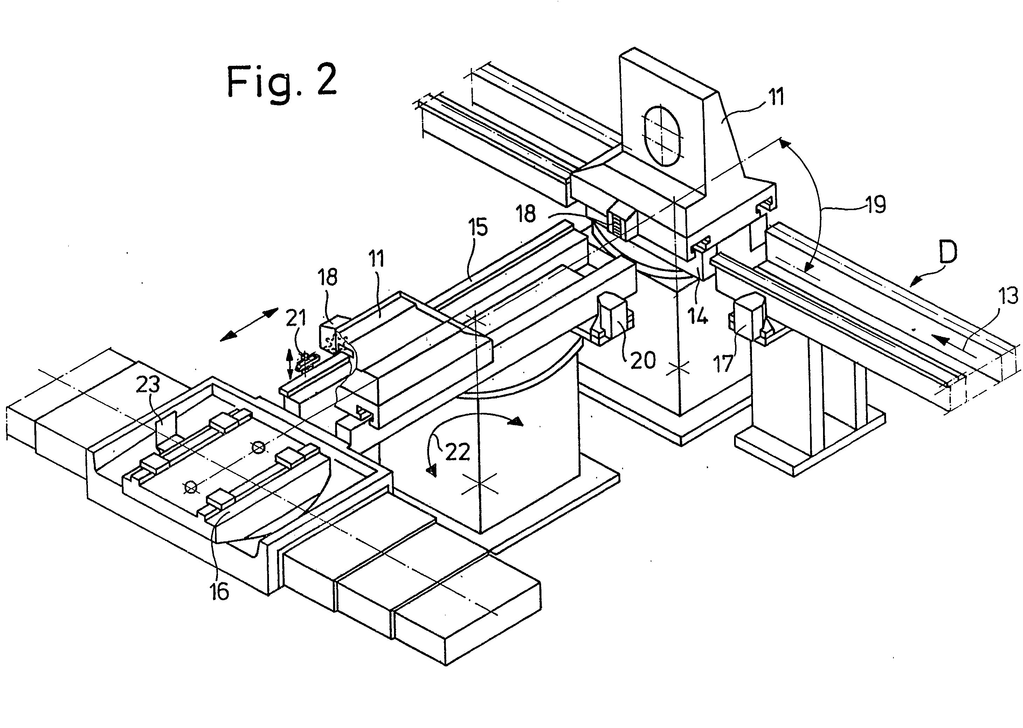

Wie aus Fig. 2 ersichtlich ist, befindet sich, in Laufrichtung der Paletten 11 gesehen, vor einer Ausfahrstelle 14, eine Lesestation 17, an der ein Kennzeichen 18 an der Palette 11 abgelesen werden kann. Ergibt sich aus dem Kennzeichen, daß die Pallette mit dem Werkstück der zugeordneten Bearbeitungsmaschine zuzuführen ist, wird diese, sofern der zugehörige Paletten-Wechseltisch 15 aufnahmefähig ist, in der Ausfahrstation 14 angehalten und die Ausfahrstation, wie durch Pfeil 19 angedeutet, um 90° geschwenkt. Die Palette 11 wird dann auf den Paletten-Wechseltisch 15 gefördert, der eine zweite Lesestation 20 aufweist. In der Lesestation 20 wird das Kennzeichen auf das in der Bearbeitungsmaschine durchzuführende Programm abgefragt und zweckmäßiger- aber nicht notwendigerweise geprüft, ob die Palette tatsächlich für die zugeordnete Bearbeitungsmaschine bestimmt ist. Diese Programmkennzeichnung wird in bekannter Weise gespeichert und zum Abruf durch das Programm der angeschlossenen Bearbeitungsmaschine bereitgehalten. Der genaue Aufbau von Kennzeichen 18 und Lesestation 17 bzw. 20 wird später erläutert.

Nach Beendigung der Bearbeitung des vorangegangenen Werkstücks in der Bearbeitungsmaschine wird dieses vom Maschinentisch 16 auf den Schwenktisch 15 zurückgefördert, so daß die zugehörige Palette die in Fig. 2 dargestellte Stellung einnimmt. Das Kennzeichen 18 einer in dieser Stellung befindlichen Palette befindet sich über einem Schaltmechanismus 21, in dem das Kennzeichen 18 zwangsläufig umgeschaltet wird, wie noch näher erläutert wird. Nachdem eder Schwenktisch 15 mit einer oder zwei Paletten beladen ist, einer mit einem zu bearbeitenden Werkstück vor der Lesestation 20 und/oder einer mit einem bearbeiteten Werkstück gegenüber dem Schaltmechanismus 21, wird der Schwenktisch 15 im Sinne des Pfeils 22 um 180° geschwenkt. Das zu bearbeitende Werkstück wird dann auf den Maschinentisch 16 gefördert, das bearbeitete Werkstück kommt in die Ausfahrstation 14, diese wird wieder entsprechend dem Pfeil 19 zurückgeschwenkt und das bearbeitete Werkstück kann im Sinne des Pfeils 13 auf der Förderanlage D zur nächsten Zieladresse, sei es einer anderen Bearbeitungsmaschine oder der Lade- und Entladestation 12 weiterlaufen. Der Schwenktisch 15 wird anschließend im leeren Zustand wieder zurückgeschwenkt, so daß er wieder die in Fig. 2 dargestellte Stellung einnimmt.

Wenn eine Palette auf den Maschinentisch 16 aufgespannt ist, befindet sich vor dem Kennzeichen 18 der Palette 11 eine Abdeckung 23, die das Kennzeichen gegen Schmiermittel, Späne oder andere Verschmutzungen schützt.

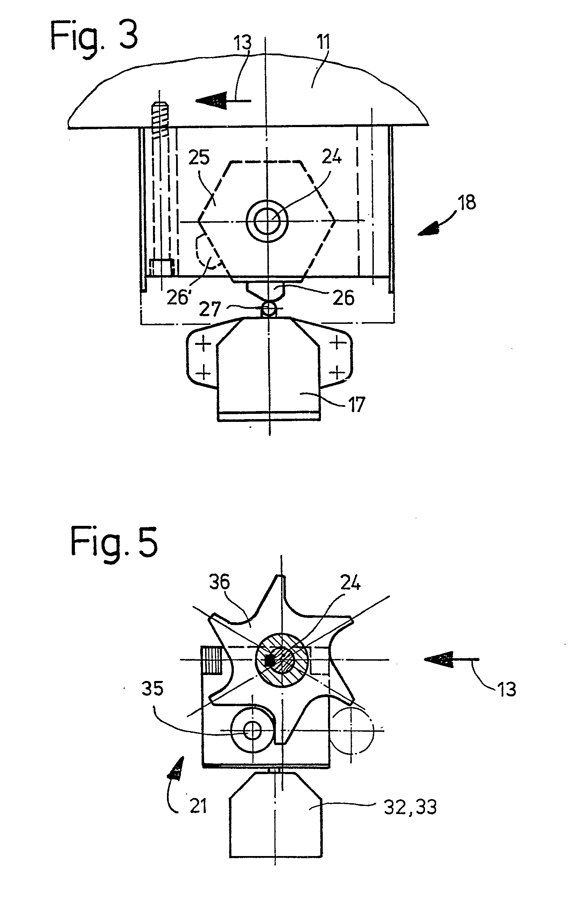

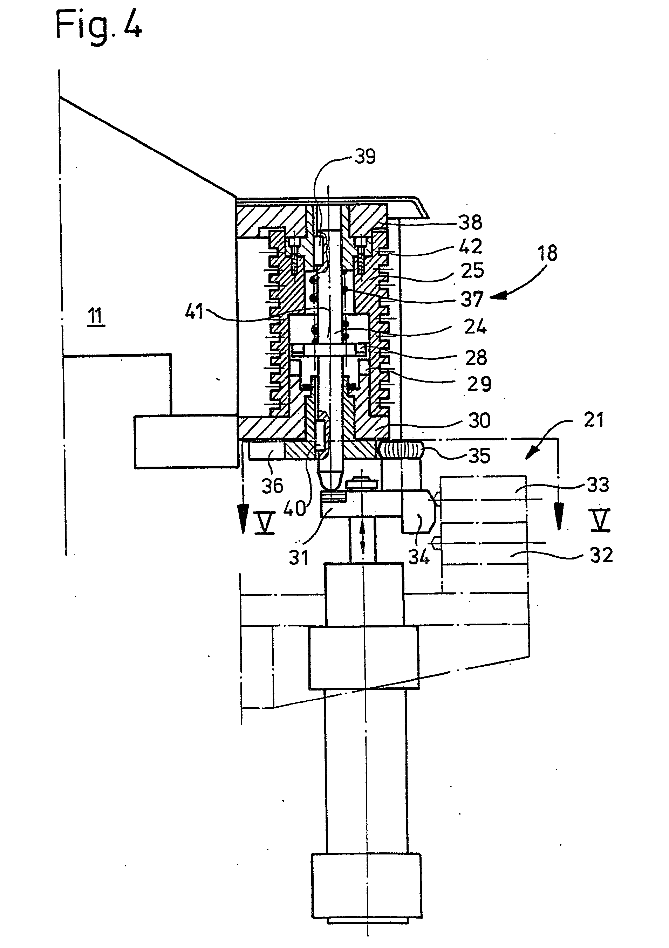

Wie aus Fig. 3 bis 5 hervorgeht, besteht das Kennzeichen aus einer um eine zur Bewegungsrichtung der Palette (Pfeil 13) senkrechte Achse 41 drehbaren Trommel 25, die im dargestellten Ausführungsbeispiel sechseckigen Querschnitt hat, es sind jedoch auch andere Querschnittsformen, wie Kreiszylinder, möglich. Am Umfang der Trommel sind Codierleisten vorgesehen, von denen der Übersichtlichkeit halber in Fig. 3 nur eine einzige durch einen vorstehenden Nocken 26 angedeutet ist. Gemäß Fig. 4 weist jede Codierleiste Aufnahmen 42 für Steuernocken wie 26 auf, in die entsprechend den darzustellenden Kennzeichen vorstehende Nocken wie 26 eingesetzt werden, bzw. nicht; in Fig. 4 ist die Trommel ohne eingesetzte Nocken dargestellt. Die Anzahl der Aufnahmen 42 jeder Codierleiste hängt von der Anzahl der Zieladressen und Programme ab, im dargestellten Ausführungsbeispiel sind zehn Aufnahmen 42 vorgesehen. Wie bereits erwähnt, können statt der Nocken auch andere Kennzeichnungsmittel verwendet werden, wie optische Kennzeichen; bei unmagnetischen Werkstoffen kommen auch Magnete in Frage. Die in Fig. 4 dargestellten Aufnahmen 42 können auch als um den Trommelumfang herumlaufende Nuten ausgebildet sein, so daß der Angabe "Codierleiste" nur eine funktionelle Bedeutung insoweit zukommt, als damit eine zusammengehörige Reihe von Nocken oder dergl.

Kennzeichnungsmitteln bezeichnet wird und nicht notwendigerweise eine körperliche, von der Trommel trennbare Halterung für Kennzeichnungsmittel.

In Fig. 3 ist die Trommel 25 einer Lesestation 17 gegenüber dargestellt. In der dargestellten Ausführungsform weist diese Lesestation 17 zehn Schalter 27 auf, die betätigt werden, wenn ein Nocken wie 26 dem Schalter 27 beim Vorbeifahren gegenübersteht, die übrigen Schalter bleiben unbetätigt. Solche Lesestationen sind bekannt und brauchen deshalb nicht näher beschrieben zu werden. Wenn an Stelle von Nocken 26 andere Kennzeichnungsmittel verwendet werden, wie Magnete, optische Kennzeichnungen oder dergl., muß die Lesestation 17 entsprechend abgewandelt werden; auch solche Lesestationen sind bekannt und brauchen deshalb nicht erläutert zu werden.

Im Innern der Trommel 25 ist ein Rastbolzen 24 koaxial zur Achse 41 angeordnet. Er ist mittels einer Passfeder 39 mit der Trommel 25 verbunden, so daß er nur mit dieser gemeinsam verdrehbar, dieser gegenüber aber längs verschiebbar ist. Der Rastbolzen 24 trägt einen Zahnkranz 28, der mit einem entsprechenden Zahnkranz 29 an einer an der Palette 11 befestigten Halterung 30 im dargestellten Ausführungsbeispiel sechs Raststellungen derfiniert. Der Rastbolzen 24 wird durch sein Eigengewicht und zusätzlich eine Feder 37 in diese Raststellungen gedrängt, so daß er, und damit die Trommel 25, ungewollt nicht aus diesen Raststellungen herausgedreht werden kann.

Bei axialer Verschiebung des Rastbolzens 24 gegen die Wirkung der Schwerkraft und der Feder 37 wird er aus den Raststellungen herausgehoben, so daß anschließend die Trommel 25 mit ihm gemeinsam in die nächste Raststellung verdreht werden kann. Zu diesem Zweck ist der Schaltmechanismus 21 vorgesehen, der in Fig. 4 näher dargestellt ist. Dieser weist eine in Richtung der Achse 41 heb- und senkbare Steuerbahn 31 auf, deren Betriebsstellung durch zwei Mikroschalter 32 und 33 angezeigt wird, die je nach Betriebsstellung der Steuerbahn 31 mit Hilfe eines Nockens 34 betätigt werden. In der angehobenen Stellung der Steuerbahn 31 ragt diese in den Laufweg der aus der Halterung 30 nach unten hervorstehenden Spitze des Rastbolzens 24, so daß dieser aus seiner Ruhestellung angehoben wird und die Rastzähne 28, 29 außer Eingriff gebracht werden.

An der Steuerbahn 31 befindet sich eine Schaltrolle 35, die in der angehobenen Stellung gemäß Fig. 4 in den Laufweg eines Schaltrades 36 ragt, in der Halterung 30 drehbar gelagert und mit dem Rastbolzen 24 mittels einer Passfeder 40 drehfest aber längs verschiebbar verbunden ist.

Wenn die Palette 11 im Sinne des Pfeils 13 in Fig. 5 an einem Schaltmechanismus 21 vorbeiläuft, dessen Steuerbahn 31 angehoben ist, läuft zunächst die nach unten vorstehende Spitze des Rastbolzens 24 auf die Steuerbahn 31 auf und wird durch diese angehoben, wie in Fig. 4 dargestellt. Anschließend kommt die Schaltrolle 35 an einem Zahn des Schaltrades 36 zur Anlage und beim Weiterlauf dreht das Schaltrad 36 und damit der Rastbolzen 24 und die Trommel 25 um eine Teilung, im dargestellten Falle 60°, weiter. Anschließend läuft die Spitze des Rastbolzens 24 wieder von der Steuerbahn 31 ab und senkt den Rastbolzen 24 in die nächste Raststellung, die durch die Zahnkränze 28 und 29 definiert ist. Es ist dann die in Fig. 3 strichpunktiert bei 26' dargestellte Codierleiste an der Stelle, die in Fig. 3 durch die in durchgezogenen Linien dargestellte Codierleiste 26 eingenommen wird, so daß beim Passieren der Palette an der nächsten Lesestation dieser ein vollständig neuer, jedoch von vornherein festgelegter Code dargeboten wird. Diese Codierleiste enthält neben einer beliebigen neuen Zieladresse (nächste Bearbeitungsmaschine bzw. Lade- und Entladestation) auch eine Kennzeichnung für das an der Zieladresse durchzuführende Programm, d.h., eine Kennzeichnung für das in der durch die Zieladresse identifizierten Bearbeitungsmaschine durchzuführende Programm. Beides, Zieladresse und Programm, sind durch Einstecken von Nocken unveränderlich vorab festgelegt. Eine Änderung kann lediglich gewollt erfolgen, wenn bewußt der Rastbolzen 24, etwa durch einen geeigneten Schlüssel oder eine getrennte Wechselstation ohne Schaltrolle 35 aus der Rastung herausgehoben und die Trommel 25 so verdreht ist, daß die zu ändernde Codierleiste zugänglich ist. Die Nocken 26 oder ändern Kennzeichen können dann manuell ausgewechselt werden, ein versehentliches Andern der Kennzeichnung ist jedoch ausgeschlossen.

## Patentansprüche

1. Flexibles Fertigungssystem für auf Paletten befestigte Werkstücke, bestehend aus einer Anzahl Bearbeitungsmaschinen, einer diese miteinander und einer Lade- und Entlade-Station verbindenden Werkstückpalettenförderanlage, den einzelnen Werkstückpaletten zuzuordnenden Kennzeichen, Lesestationen zum Ablesen der Kennzeichen an den Ausfahrstellen und Einrichtungen für die Einstellung einer neuen Zieladresse, *dadurch gekennzeichnet,* daß das Kennzeichen aus einer in mehrere Raststellungen drehbaren Trommel besteht, auf deren Umfang eine der Zahl der Raststellungen gleiche Zahl von Codierleisten angeordnet ist, in deren jeder eine vollständige Zieladresse einschließlich eventueller Prüfzeichen darstellbar ist, dass zumindest ein Teil der Kodierleisten weitere Kennzeichnungen enthält und daß die Einrichtung für die Einstellung einer neuen Zieladresse aus einem Schaltmechanismus besteht, der die Trommel jeweils selbsttätig um eine Teilung aus einer Raststellung in die nächstfolgende weiterdreht.

2. Fertigungssystem nach Anspruch 1, dadurch gekennzeichnet, daß die Trommel formschlüssig in ihren Raststellungen durch Eingriff von Rastzähnen festgelegt ist, die axial aus dem Eingriff herausschiebbar sind, und daß der Schaltmechanismus eine die Rastzähne aus dem Eingriff herausschiebende Steuerbahn aufweist.

3. Fertigungssystem nach Anspruch 2, dadurch gekennzeichnet, daß die Rastzähne durch Federkraft und/oder Eigengewicht in den formschlüssigen Eingriff gedrängt sind.

4. Fertigungssystem nach Anspruch 1, 2 oder 3, dadurch gekennzeichnet, daß jede Codierleiste zur auswechselbaren Aufnahme einer Reihe von Nocken, Schaltbolzen, Magneten, optischen Markierungen oder dergl. Kennzeichnungselementen vorgesehen ist.

5. Fertigungssystem nach einem der Ansprüche 1 bis 4, dadurch gekennzeichnet, daß der Maschinentisch jeder Bearbeitungsmaschine eine Abdeckung aufweist, die die Trommel bei auf dem Maschinentisch befindlicher Palette völlig abdeckt.

6. Fertigungssystem nach Anspruch 5, dadurch gekennzeichnet, daß zwischen jeder zu einer Bearbeitungsmaschine führenden Ausfahrstelle und der betreffenden Bearbeitungsmaschine eine speichernde Lesestation zum Ablesen und Speichern von über die Zieladresse hinaus in einer Kodierleiste enthaltenen Kennzeichnungen angeordnet ist.

## Revendications

1. Système de fabrication, d'utilisation souple, de pièces à usiner fixées sur des palettes, constitué d'un certain nombre de machines d'usinage, d'une installation de transport des palettes pour les pièces à usiner reliant ces machines entre elles et à un poste de chargement et de déchargement, de signes de caractérisation associés aux palettes, de postes de lecture des signes de caractérisation aux endroits de sortie et de dispositifs destinés à mettre une nouvelle adresse de destination, caractérisé en ce que le signe de caractérisation est constitué d'un tambour qui peut se mettre, en tournant suivant plusieurs positions où il est bloqué en rotation et à la périphérie duquel il y a un nombre de barrettes de codage égal à celui des positions de blocage, barrettes dans chacune desquelles peut être représentée une adresse complète de destination, y compris des signes éventuels de vérification, au moins une partie des baguettes de codage contient d'autres signes de caractérisation et le dispositif destiné à mettre une nouvelle adresse de destination est constitué d'un mécanisme de manoeuvre, qui, chaque fois, fait tourner automatiquement le tambour d'une position de blocage à la suivante.

2. Système de fabrication suivant la revendication 1, caractérisé en ce que le tambour est maintenu par complémentarité de forme en ses positions de blocage par la venue en prise de dents de blocage qui peuvent se dégager suivant la direction axiale et le mécanisme de manoeuvre présente une piste de commande servant à dégager les dents de blocage.

3. Système de fabrication suivant la revendication 2, caractérisé en ce que les dents de blocage sont mises en prise par complémentarité de forme par une force élastique et/ou par leur propre poids.

4. Système de fabrication suivant la revendication 1, 2 ou 3, caractérisé en ce que chaque baguette de codage est prévue pour recevoir, avec possibilité d'échange, une série de cames, d'axes, d'aimants ou de repères optiques ou d'autres éléments de caractérisation semblables.

5. Système de fabrication suivant l'une des revendications 1 à 4, caractérisé en ce que le plateau de chaque machine d'usinage présente un cache, qui cache entièrement le tambour lorsque les palettes se trouvent sur le plateau de la machine.

6. Système de fabrication suivant la revendication 5, caractérisé en ce qu'entre chaque endroit de sortie menant à une machine d'usinage et la machine d'usinage correspondante est interposé un poste de lecture et de mémorisation, qui lit et mémorise, par l'intermédiaire des adresses de destination, des signes de caractérisation contenus dans une baguette de codage.

## Claims

1. Flexible manufacturing system for workpieces affixed to pallets, comprising a plurality of processing machines, a workpiece-pallet conveyor system connecting such processing machines with each other, and a loading and unloading station, identification means to be associated with individual workpiece pallets, reading stations for reading said identification means at the exits of said conveyor system, and means for encoding a new target address, characterized in that said identification means comprises a drum rotatable into a plurality of registering positions, on the periphery of which drum there is disposed a plurality of code strips the number of which is equal to the number of registering positions of said drum, each of which code strips is adapted to represent a complete target address including possible parity characters, that at least a portion of said code strips includes further identifications, and that said means for encoding a new target address comprises an indexing mechanism which in each case automatically rotates said drum by one step from one registering position into the next following.

2. Manufacturing system according to claim 1, characterized in that said drum is positively locked in its registering positions by the engagement of notches which are adapted to be axially shifted out of engagement, and that said indexing mechanism includes a cam shifting said notches out of engagement.

3. Manufacturing systems according to claim 2, characterized in that said notches are urged into said positive engagement by spring force and/or gravity.

4. Manufacturing system according to claim 1, 2 or 3, characterized in that in each coding strip is adapted for removably receiving a series of cams, crank rods, magnets, optical markings or the like identification members.

5. Manufacturing system according to any of the claims 1 to 4, characterized in that the machine table of each processing machine includes a cover covering said drum completely once the associated palette rests on said machine table.

6. Manufacturing system according to claim 5, characterized in that between each exit leading to a processing machine, and the respective processing machine, there is provided a storing reading station for reading and storing of identifications contained in a coding strip exceeding the target address.

# Fig.1

# Fig. 2

0 003 024

# Fig. 3

13  11

25  24

18

26'  26

27

17

# Fig. 5

36  24

13

35

21  32,33

Fig. 4

0 003 024

4